# EUROPEAN PATENT APPLICATION

(11) **EP 1 577 817 A2**
(43) Date of publication of application: **21.09.2005**
(21) Application number: 05102003.0
(22) Date of filing: 15.03.2005
(51) Int. Cl.: G06F 17/60

(54) **System for capturing project time and expense data**

(30) Priority: 15.03.2004 US 801198
(71) Applicant: MICROSOFT CORPORATION, Redmond, WA 98052 (US)
(72) Inventor: Dennis, David Michael, 98052, Redmond (US); Saadat, Kamran, 98052, Redmond (US); Tolgu, Karl E. A., 98052, Redmond (US); Forney, Michael Kent, 98052, Redmond (US); Gottumukkala, Ramakanthachary S., 98052, Redmond (US); Rethy, Victor S., 98052, Redmond (US); Liu, Zhongming, Redmond, WA Washington 98052 (US)
(74) Representative: Grünecker, Kinkeldey, Stockmair & Schwanhäusser Anwaltssozietät

(57) **Abstract**

A system for capturing time and expense information over a network and for processing the information into a project accounting system has a project accounting system adapted to store time and expense data associated with a project. A user interface provides a form accessible over a network by a user via a browser. The form comprises fields for data entry by the user and a button for electronic submission of the form. A services API is adapted to invoke transactions with the project accounting system based on data contained in the submitted form.

## Description

### BACKGROUND OF THE INVENTION

The present invention generally pertains to systems adapted to provide a bridge between a user interface and office systems. More particularly, the present invention relates to a system adapted to capture project-related time and expense data into a project accounting system.

Business applications in the 1980s and 1990s primarily focused on business process automation of internal, back-office only functions. While internal efficiency is important, the current trend is toward optimization of the effectiveness of relationships inside and outside the business with individuals and businesses who are their customers, suppliers, partners, financiers and employees. Typically, optimization of the effectiveness of relationships has tended toward increased self-service and more targeted service offerings. As used herein, the term "self-service" refers to interactive user interfaces and presentation interfaces adapted to offer functionality and/or desired information to a user, without the need for interaction from other humans.

Many businesses employ on-site applications to support their business operations, including accounting software applications, time-keeping software applications, and the like. Often, such applications are not integrated. Moreover, to provide self-service offerings, web-based services are often required. Such web-based services are often used to interconnect the unrelated business applications. Unfortunately, such interconnections are often ad hoc, meaning that they may be cobbled together using one or more web-services and/or one or more web or traditional software applications.

In order for a company to efficiently bill its customers, understand its costs and reimburse its employees, the company must capture all project-related costs and time entries. Typically, employees record their own time and expenses, and that time and expense data is entered into an accounting system. It is critical that such systems receive and accurately record the data.

Various companies have integrated time and expense functionality with project accounting systems. However, such systems are often enterprise solutions that may be too expensive for many organizations.

### SUMMARY OF THE INVENTION

A system for capturing cost information over a network and for processing the information into a project accounting system includes an accounting system, a user interface and services API. The project accounting system is adapted to store time and expense data associated with a project. The user interface provides a form accessible over a network by a user via a browser. The form comprises fields for data entry by the user and a button for electronic submission of the form. The services API is adapted to invoke transactions with the project accounting system based on data contained in the submitted form.

In another embodiment, a method of capturing time and expense data into an accounting database via forms is provided according to an embodiment of the present invention. Forms are hosted on a web server. Each form is accessible to a user over a network via a browser. Each form includes data fields for user data entry; an object adapted to submit the web form when completed by the user; and embedded server controls adapted to invoke business rules upon submission by the user. The business rules are written in managed code. Submitted forms are processed using a services API according to the invoked business rules. The services API links data contained within the forms to entities within the accounting database.

In another embodiment, a system for capturing time and expense information over a network and for processing the information into an accounting system includes an accounting system, web parts and a services API. The accounting system is adapted to store time and expense information. A plurality of web part forms is adapted for user input over a network via a browser. The services API is adapted to implement and sequence business rules written in managed code to process the user input into the accounting system.

### BRIEF DESCRIPTION OF THE DRAWINGS

FIG. 1 is a diagrammatic view of the computing system environment on which embodiments of the present invention may be implemented
FIG. 2 is a simplified block diagram of the time and expense system according to an embodiment of the present invention.
FIG. 3 is a simplified block diagram of a business application framework providing security, data access, and workflow processes according to an embodiment of the present invention.
FIG. 4A is a simplified timesheet processing flow diagram according to an embodiment of the present invention.
FIG. 4B is a simplified expense report processing flow diagram according to an embodiment of the present invention.
FIG. 5 is a simplified diagram of an entity model in unified modeling language diagram notation according to an embodiment of the present invention.

### DETAILED DESCRIPTION OF ILLUSTRATIVE EMBODIMENTS

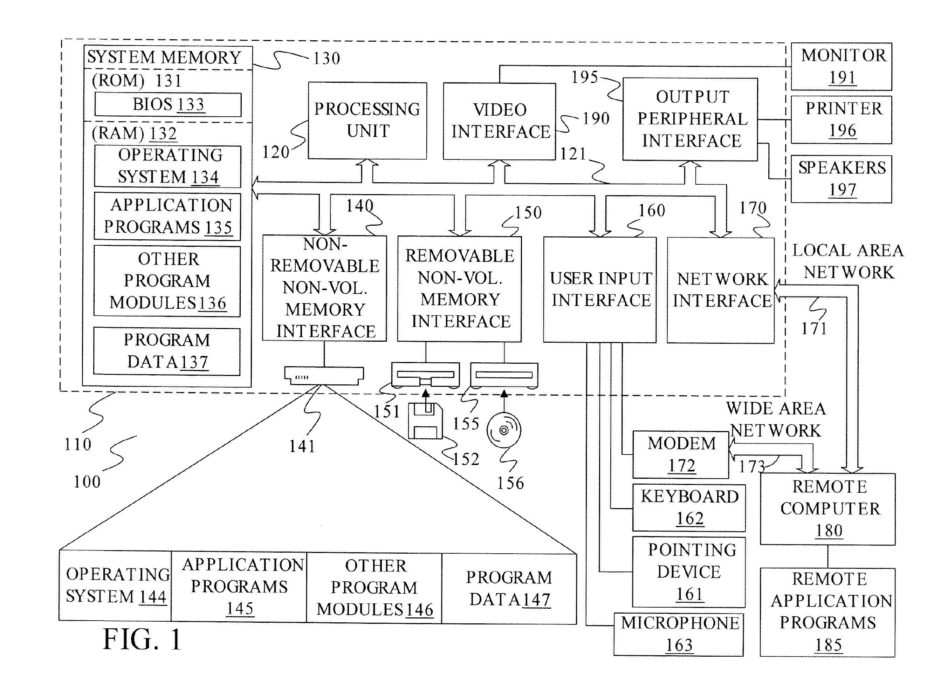

Prior to describing the present invention in detail, one embodiment of an environment in which it can be used is described. FIG. 1 illustrates an example of a suitable computing system environment 100 on which the invention may be implemented. The computing system environment 100 is only one example of a suitable computing environment and is not intended to suggest any limitation as to the scope of use or functionality of the invention. Neither should the computing environment 100 be interpreted as having any dependency or requirement relating to any one or combination of components illustrated in the exemplary operating environment 100.

The invention is operational with numerous other general purpose or special purpose computing system environments or configurations. Examples of well-known computing systems, environments, and/or configurations that may be suitable for use with the invention include, but are not limited to, personal computers, server computers, hand-held or laptop devices, multiprocessor systems, microprocessor-based systems, set top boxes, programmable consumer electronics, network PCs, minicomputers, mainframe computers, telephony systems, distributed computing environments that include any of the above systems or devices, and the like.

The invention may be described in the general context of computer-executable instructions, such as program modules, being executed by a computer. Generally, program modules include routines, programs, objects, components, data structures, etc. that perform particular tasks or implement particular abstract data types. The invention may also be practiced in distributed computing environments where tasks are performed by remote processing devices that are linked through a communications network. In a distributed computing environment, program modules may be located in both local and remote computer storage media including memory storage devices.

With reference to FIG. 1, an exemplary system for implementing the invention includes a general-purpose computing device in the form of a computer 110. Components of computer 110 may include, but are not limited to, a processing unit 120, a system memory 130, and a system bus 121 that couples various system components including the system memory to the processing unit 120. The system bus 121 may be any of several types of bus structures including a memory bus or memory controller, a peripheral bus, and a local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus also known as Mezzanine bus.

Computer 110 typically includes a variety of computer readable media. Computer readable media can be any available media that can be accessed by computer 110 and includes both volatile and nonvolatile media, removable and non-removable media. By way of example, and not limitation, computer readable media may comprise computer storage media and communication media. Computer storage media includes both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computer 110. Communication media typically embodies computer readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above should also be included within the scope of computer readable media.

The system memory 130 includes computer storage media in the form of volatile and/or nonvolatile memory such as read only memory (ROM) 131 and random access memory (RAM) 132. A basic input/output system 133 (BIOS), containing the basic routines that help to transfer information between elements within computer 110, such as during start-up, is typically stored in ROM 131. RAM 132 typically contains data and/or program modules that are immediately accessible to and/or presently being operated on by processing unit 120. By way of example, and not limitation, FIG. 1 illustrates operating system 134, application programs 135, other program modules 136, and program data 137.

The computer 110 may also include other removable/non-removable volatile/nonvolatile computer storage media. By way of example only, FIG. 1 illustrates a hard disk drive 141 that reads from or writes to non-removable, nonvolatile magnetic media, a magnetic disk drive 151 that reads from or writes to a removable, nonvolatile magnetic disk 152, and an optical disk drive 155 that reads from or writes to a removable, nonvolatile optical disk 156 such as a CD ROM or other optical media. Other removable/non-removable, volatile/nonvolatile computer storage media that can be used in the exemplary operating environment include, but are not limited to, magnetic tape cassettes, flash memory cards, digital versatile disks, digital video tape, solid state RAM, solid state ROM, and the like. The hard disk drive 141 is typically connected to the system bus 121 through a non-removable memory interface such as interface 140, and magnetic disk drive 151 and optical disk drive 155 are typically connected to the system bus 121 by a removable memory interface, such as interface 150.

The drives and their associated computer storage media discussed above and illustrated in FIG. 1, provide storage of computer readable instructions, data structures, program modules and other data for the computer 110. In FIG. 1, for example, hard disk drive 141 is illustrated as storing operating system 144, application programs 145, other program modules 146, and program data 147. Note that these components can either be the same as or different from operating system 134, application programs 135, other program modules 136, and program data 137. Operating system 144, application programs 145, other program modules 146, and program data 147 are given different numbers here to illustrate that, at a minimum, they are different copies.

A user may enter commands and information into the computer 110 through input devices such as a keyboard 162, a microphone 163, and a pointing device 161, such as a mouse, trackball or touch pad. Other input devices (not shown) may include a joystick, game pad, satellite dish, scanner, or the like. These and other input devices are often connected to the processing unit 120 through a user input interface 160 that is coupled to the system bus, but may be connected by other interface and bus structures, such as a parallel port, game port or a universal serial bus (USB). A monitor 191 or other type of display device is also connected to the system bus 121 via an interface, such as a video interface 190. In addition to the monitor, computers may also include other peripheral output devices such as speakers 197 and printer 196, which may be connected through an output peripheral interface 190.

The computer 110 may operate in a networked environment using logical connections to one or more remote computers, such as a remote computer 180. The remote computer 180 may be a personal computer, a hand-held device, a server, a router, a network PC, a peer device or other common network node, and typically includes many or all of the elements described above relative to the computer 110. The logical connections depicted in FIG. 1 include a local area network (LAN) 171 and a wide area network (WAN) 173, but may also include other networks. Such networking environments are commonplace in offices, enterprise-wide computer networks, intranets and the Internet.

When used in a LAN networking environment, the computer 110 is connected to the LAN 171 through a network interface or adapter 170. When used in a WAN networking environment, the computer 110 typically includes a modem 172 or other means for establishing communications over the MAN 173, such as the Internet. The modem 172, which may be internal or external, may be connected to the system bus 121 via the user input interface 160, or other appropriate mechanism. In a networked environment, program modules depicted relative to the computer 110, or portions thereof, may be stored in the remote memory storage device. By way of example, and not limitation, FIG. 1 illustrates remote application programs 185 as residing on remote computer 180. It will be appreciated that the network connections shown are exemplary and other means of establishing a communications link between the computers may be used.

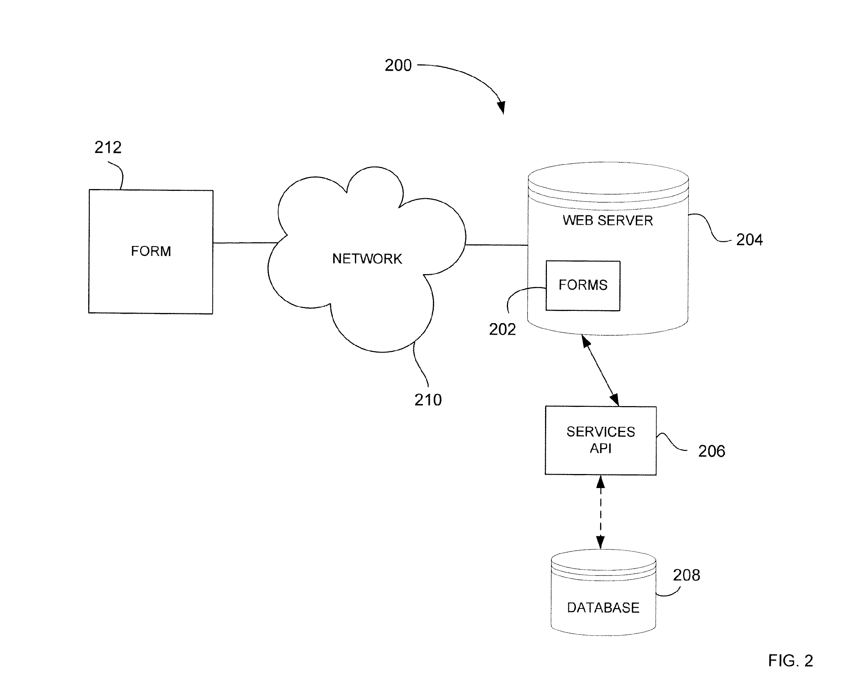

FIG. 2 shows a time and expense system 200 according to an embodiment of the present invention. Web part forms 202 are deployed within web server 204. Services application program interface (API) 206 implements and sequences business rules written in managed code. As needed, services API 206 invokes transactions and/or queries with database 208. Forms 204 are displayed to users over a network 210 within user interface 212.

In general, the services API 206 is an interface (or set of function calling conventions) that application programs use for accessing services provided by some other (typically lower-level) module. In this instance, the services API 206 is used to process business rules written in managed code and optionally to access services provided by the database 208.

The term "managed code" refers to code that is developed with a language compiler that targets a runtime. Managed code provides information (sometimes referred to as "metadata") to allow the runtime to locate methods encoded in assembly modules, to store and retrieve security information, to handle exceptions, and so on. In general, managed code is code that targets the runtime. The runtime manages the code at execution, providing core services such as memory management, thread management, and remoting (an API that allows modules to communicate across system boundaries), while also enforcing strict type safety within the code.

Programming within a managed code execution environment is known in the art. One known example of managed code targets the Common Language Runtime (CLR). Compilers and tools expose the runtime's functionality and enable a developer to write code that benefits from managed code execution. Managed code benefits from features such as cross-language integration, cross-language exception handling, enhanced security, versioning and deployment support. Additionally, managed code provides a simplified model for component interaction, as well as debugging and profiling services.

Network 210 may be any type of network capable of supporting data transmissions, including a public switched phone network, a local area network, a wide area network (including the Internet), a cellular or digital wireless network, or any other type of network. The present invention is independent of the transmission medium, provided the medium supports data transmission.

In general, the user interface 212 provides a presentation interface for displaying a form 202 to a user over a network 210. In an illustrative embodiment, the user interface 212 is displayed as a page within a browser window of an Internet browser application. The user fills out the form 202 within the user interface 212, and submits the form 202 over the network 210 to the web server 204. The form 202 calls a services API 206. The called services API 206 is invoked, and it processes data submitted by the user via one of the forms 202 according to managed code. As necessary, the services API 206 interacts with database 208 to store, for example, a time entry from an employee.

In general, the services API 206 processes business rules written in managed code. The business rules may include steps in an approval process. Thus, the business rules may define a workflow process. In general, the services API 206 completes the critical link necessary for an accounting subsystem, for example, to receive time and expense transactions and to process the time and expense data in order to complete invoice generation, payment capture, employee payroll, and expense reimbursements.

In general, an approval process may be implemented in any number of ways. In one embodiment, the approval process is part of the automated workflow. The services API 206 processes the business rules against the data stored in the web form. When a manager logs into the system, he or she can be alerted to posted time and expense forms for which he or she plays a supervisory function. The manager can then view those forms and either accept, terminate or return the form to the employee for further processing. When an employee user logs into the system, he or she can access the form requiring modification, modify a pending form, create and submit a new form and so on. The system can grant access to forms associated with each user according to his or her "authenticated role" within the system. For example, an employee can have multiple roles within an organization. An employee may be a supervisor to one employee, a manager to another employee, and so on.

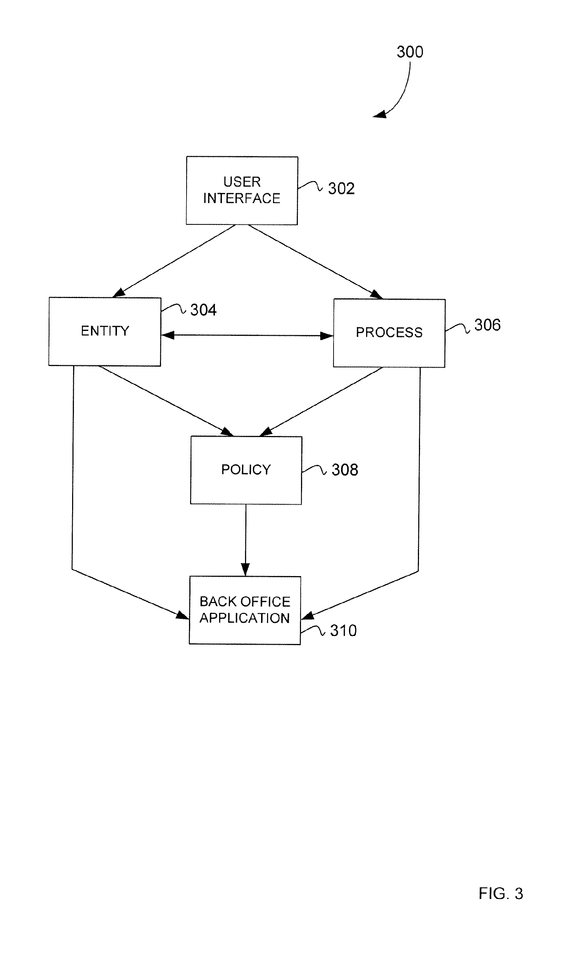

FIG. 3 illustrates a business application framework 300, which is based around component elements. In general, the business application framework 300 provides a set of application services for processing, storing and displaying data. Business application framework 300 provides support for security, data access, messaging, workflow, event brokering, and so on.

Business application framework 300 includes a user interface (UI) 302, which interacts with entity 304 and process 306. The UI 302 provides an interface for entering data, performing tasks, and displaying/reporting information. Entity 304 is a fundamental unit of data, which includes both business data and data integrity rules. Process 306 is a fundamental unit of business logic.

Policy 308 is a set of business rule custamizatian points for providing security, data access, workflow and event brokering. Policy 308 interacts directly with entity 304 and process 306 to manage data displayed to the UI 302. Back Office Application is a focal point for many operations of the framework 300.

In general, business application framework 300 is based on components. Each component ccnsists of zero or more entities and zero or more processes. Components provide an interface for a set of classes. Extensible Markup Language (XML) web services are created by publishing all or part of a component's public interface.

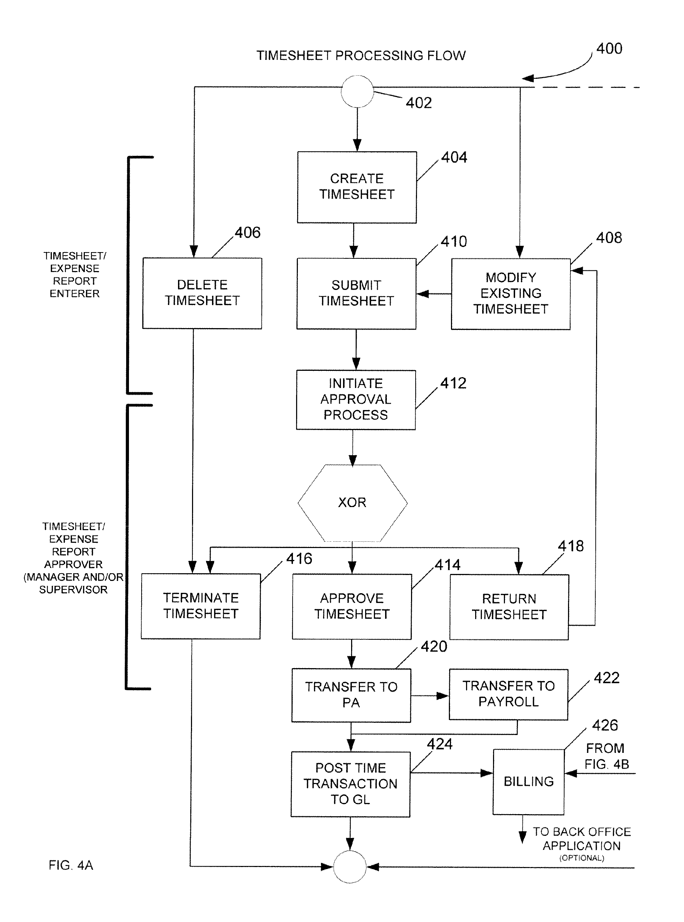

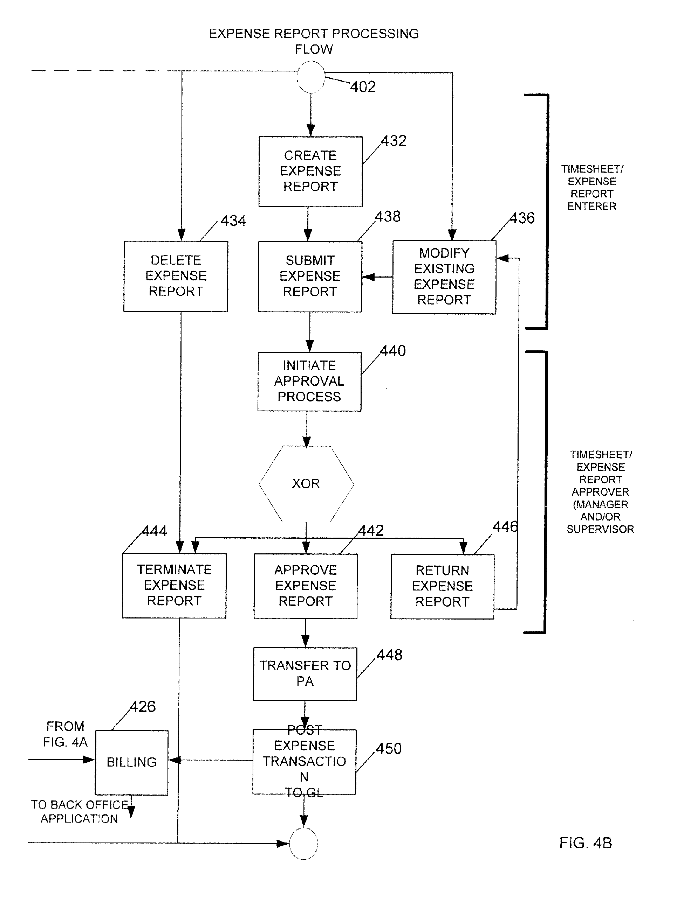

FIGS. 4A and 4B illustrate timesheet and expense report processing flows, respectively. In this embodiment, the two flows are accessible by a user via options presented in the UI, and both flows post data to a billing function. Thus, the two flows are related and share common elements. In alternative embodiments, the two flows may be separate, and additional workflow processes may be utilized to post the processed timesheet and expense report data to the general ledger.

FIG. 4A illustrates a simplified flow diagram of a timesheet processing flow according to an embodiment of the present invention, where the user accesses the interface using a web browser and where the interface is displayed as a web-based form. The user interface 402 offers the user three basic timesheet options: create time sheet 404, delete timesheet 406 and modify existing timesheet 408.

When a user through the UI 402 selects the option to create timesheet 404, a timesheet form is displayed within the browser window. The user completes the timesheet form, and submits the completed timesheet 410. The services API processes the business rules, which initiate the approval process 412. As previously discussed, the business rules may include workflow processes, which include an authorization step, such as presenting the timesheet to a supervisor for approval. The supervisor may then either approve the time sheet 414, terminate the timesheet 416 or return the timesheet to the user for modification 418. If the timesheet is returned to the user 418, the user can then modify the existing timesheet 408 and submit the modified timesheet 410.

If the supervisor approves the timesheet 414, the timesheet data is transferred to the project accounting system 420 and transferred to the payroll system 422. The timesheet data from the accounting and payroll systems are then posted to the general ledger 424, and posted to a billing function 426.

If the user from the UI 402 or the supervisor from the approval process 412 elects to terminate the timesheet 416, the timesheet data is deleted.

The billing function 426 can generate the billing printout or electronic bill forms directly, or can post the bill information for each customer to a back office application.

FIG. 4B illustrates an expense report processing flow 430 according to an embodiment of the present invention. From the UI 402, the user selects between three options: create expense report 432, delete expense report 434, or modify expense report 436.

When a user through the UI 402 selects the option to create expense report 404, an expense report form is displayed within the browser window. The user completes the expense report form, and submits the completed expense report 436. The services API processes the business rules, which initiate the approval process 440 (which may be a separate set of business rules from business rules 412 in FIG 4A). As previously discussed, the business rules may include workflow processes which include an authorization step, such as presenting the expense report to a supervisor for approval. The supervisor may then either approve the expense report 442, terminate the expense report 444 or return the expense report 446 to the user for modification 436. If the expense report is returned to the user 446, the user can then modify the expense report 436 and submit the modified timesheet 438.

If the supervisor approves the expense report 442, the expense report data is transferred to the project accounting system 448. The expense report data from the accounting system is then posted to the general ledger 450, and posted to a billing function 426.

If the user from the UI 402 or the supervisor during the approval process 440 elects to terminate the expense report 444, the expense report data is deleted.

The billing function 426 can generate the billing printout or electronic bill forms directly, or can post the bill information for each customer to a back office application.

In general, the user can access the timesheet and expense report forms via the webserver. The user completes the form within the web browser window and submits the form. The form calls a services API, which implements and sequences business rules written in managed code in order to process the data contained within the form. Finally, the data is stored and/or utilized to generate maintain accurate financial data.

The time and expense feature offered by the present invention captures all project related costs so that companies can bill their customers efficiently, and in a timely and accurate manner. Additionally, companies can accurately and efficiently capture expense data so as to reimburse their employees for project incurred expenses. Time is captured from both project and non-project purposes, and is sent to payroll so that employees can be paid. The time and expense functionality described herein provides a self-service web application that can be utilized with a number of web-servers and implementations. In an illustrative embodiment, the forms can be ASP.Net web part forms, which include ASP.NET server controls. The web part forms may be pages associated with Microsoft® SharePoint® products and technologies. The terms "MTCRCSOFT" and "SHAREPOINT" are registered trademarks own by Microsoft Corporation of Redmond, Washington. Unlike standard ASP.NET controls, which are added to web form pages by programmers at design time, the web parts are intended to be added to Web Part Zones on web part pages by users at run time. Depending on authority permissions assigned to a user, users may have varying levels of freedom to modify web parts and web part pages. In other embodiments, the forms may be other types of forms as well.

The present invention may be implemented, for example, utilizing a Microsoft® Business Solutions Business Portal, with ASP.NET services and a Great Plains Accounting back-end system. In other embodiments, an ASP server may be provided with ASP forms and an associated services API for providing and processing business rules and for interacting with a database.

In general, the present invention, provides a critical link in the end-to-end business process that captures incurred project costs, reimburses employees, and invoices the customer with the time and expense data being entered only once. A significant benefit of the present invention is the capability to reduce the time it takes to invoice the customer and therefore receive payment. This in turn has the potential to improve a company's cash flow. Additionally, employees can be reimbursed for their out-of-pocket expenses more rapidly as compared with non-automated or non-integrated time and expense capture systems or applications.

While the approval process was described in FIGS. 4A and 4B as involving a supervisor, it should be understood by a worker skilled in the art that the approval process may be automated for certain expenditures and/or time entries. Thus, in certain instances, the data may be processed and approved programmatically and without supervisor involvement, according to the business rules implemented in managed code.

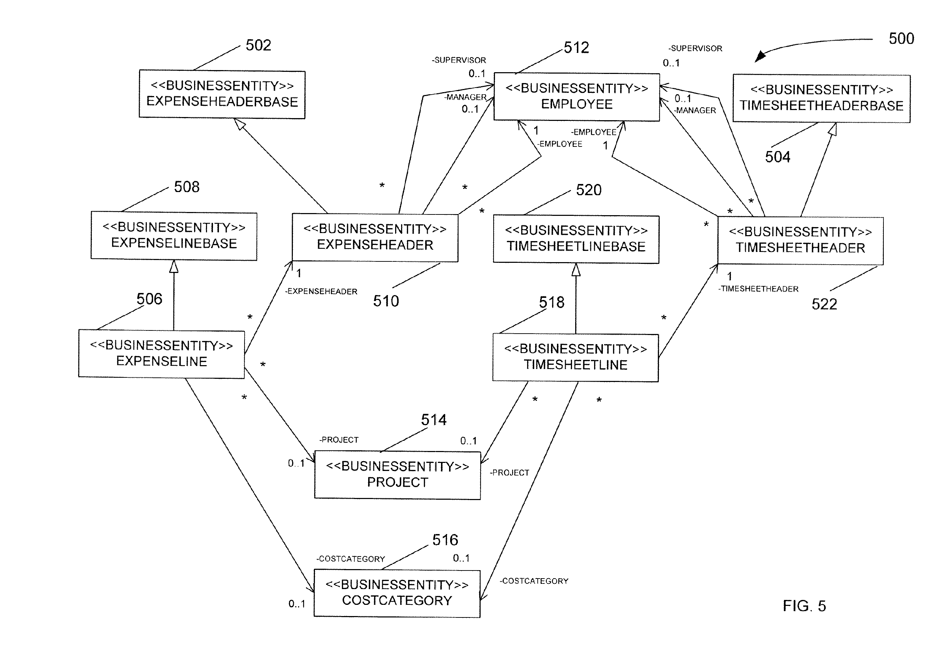

FIG. 5 illustrates an entity model using unified modeling language (UML) according to an embodiment of the present invention. In general, arrows that have a hollow tip within the diagram indicate a relationship to a base class, whereas thin-arrows indicate a relationship other than a base class. The numbers adjacent to the thin-arrows indicate whether the object must be included or if it is optional. A designation of "1" next to the arrow means that the object must be included, whereas a designation of "0..1" indicates that 0 or 1 objects may be included. "0..n" would theoretically indicate that 0 or more objects may be included.

As shown, the UML business entity model 500 has an expense header base 502 and a timesheet header base 5C4. As shown, an expense line 506 inherits its structure from and expense line base class 508. Each expense line 506 must have an expense header 510, which inherits its structure from the expense header base 502. The expense header 510, in turn, must include at least an employee object 512. The employee object 512 represents an employee of the company. The header may optionally include the employee's manager and/or supervisor, which are also employee objects.

The expense line object 506 may optionally include a project object 514 and a cost category 516. Thus, the UML defines an object-based representation of the structure of the system. Each element may be thought of as software class within the system where instantiation of a class requires a base constructor for the object from which the object inherits its properties.

Like the business expense, the timesheet line 518 inherits its structure from the timesheet line base 520. The timesheet line 518 must include a timesheet header 522, which inherits its structure from a timesheet header base 524. Like the expense header 510, the timesheet header 522must include an employee object 512, and may include manager and supervisor objects associated with the employee object 512.

The timesheet line 518 may optionally include a project object 514 and a cost category object 516. Thus, the timesheet line object 518 is constructed of elements related to timesheet data contained in the accounting database. Depending on the particular implementation, other objects and relationships may be defined to fit the particular configuration.

In general, the services API invokes data transactions to and from the database. The services API may invoke query transactions, save business entities to the database, and so on. Business entities are abstractions used to access information stored in the database using an object-oriented approach.

Although the present invention has been described with reference to particular embodiments, workers skilled in the art will recognize that changes may be made in form and detail without departing from the spirit and scope of the invention.

## Claims

1. A system for capturing cost information over a network and for processing the information into a project accounting system, the system comprising:
a project accounting system adapted to store time and expense data associated with a project;
a user interface provided as a form accessible over a network by a user via a browser, the form comprising fields for data entry by the user and a button for electronic submission of the form; and
a services API adapted to invoke transactions with the project accounting system based on data contained in the submitted form.

2. The system of claim 1 and further comprising:
a server adapted to host the forms and to serve the forms to users according to business rules written in managed code.

3. The system of claim 2 wherein the server is an active server page server and wherein the forms are active server page forms.

4. The system of claim 1 wherein the web-based forms contain calls to the services API.

5. The system of claim 2 wherein the web server is a Microsoft Business Solutions Business Portal.

6. The system of claim 1 wherein the services API is called using .NET Web services.

7. The system of claim 1 wherein the services API is called using remoting.

8. The system of claim 1 wherein the web forms further comprise:
embedded services API calls adapted to invoke business rules for processing data contained within the submitted web-based form.

9. The system of claim 1 wherein the project accounting system is a Great Plains Project Accounting system.

10. A method of capturing time and expense data into an accounting database via forms, the method comprising:
hosting forms on a server, each form being accessible to a user over a network via a browser and each form comprising:
data fields for user data entry;
an object adapted to submit the form
when completed by the user; and
embedded server controls adapted to invoke business rules upon submission by the user, the business rules being written in managed code; and
processing submitted forms with a services API according to the invoked business rules;
wherein the services API associates data contained in the submitted forms to entities in the accounting database.

11. The method of claim 10 wherein the managed code is written to a common language runtime environment.

12. The method of claim 10 wherein the step of hosting comprises:
storing a plurality of web forms on a web server wherein at least one of the plurality of web forms is a timesheet form; and
providing at least one of the plurality of forms to the user over the network for display within a window of the Internet browser.

13. The method of claim 10 wherein the step of processing comprises:
processing data contained in the submitted form according to the business rules; and
interacting with the accounting database according to the processed data and the business rules.

14. The method of claim 13 wherein the step of interacting comprises:
storing data in the accounting database.

15. The method of claim 13 wherein the step of interacting comprises:
querying the accounting database according to the processed data.

16. The method of claim 15 wherein the step of querying returns a value for display in a form within a window of the browser.

17. A system for capturing time and expense information over a network and for processing the information into an accounting system, the system comprising:
an accounting system adapted to store time and expense information;
a plurality of web part forms adapted for user input over a network via a browser; and
a services API adapted to implement and sequence business rules written in managed code to process the user input into the accounting system.

18. The system of claim 17 and further comprising:
a server adapted to host the plurality of web part forms and to serve the forms to users on request.

19. The system of claim 17 wherein the services API invokes transactions with the accounting system.

20. The system of claim 17 wherein the business rules comprise steps in an approval process.
